# FASCICULE DE BREVET EUROPEEN

(11) **EP 2 005 869 B1**
(45) Date de publication et mention de la délivrance du brevet: **23.11.2011**
(21) Numéro de dépôt: 08356093.8
(22) Date de dépôt: 18.06.2008
(51) Int. Cl.: A47J 43/07

(54) **Appareil de préparation culinaire muni d'un dispositif de sécurité**
Apparat zur Essenszubereitung, der mit einer Sicherheitsvorrichtung ausgestattet ist
Cooking appliance comprising a safety system

(30) Priorité: 22.06.2007 FR 0704461
(43) Date de publication de la demande: 24.12.2008
(73) Titulaire: SEB S.A., 69130 Ecully (FR)
(72) Inventeur: Retour, Stéphane, 53100 Moulay (FR); Follezour, Anne-Estelle, 53100 Châtillon sur Colmont (FR); Feron, Stéphanie, 53440 Marcille la Ville (FR); Paumard, Jonathan, 53470 Martigne sur Mayenne (FR); Eveillard, Philippe, 53300 Saint Fraimbault de Prières (FR); Martin, Philippe, 53240 Andouille (FR)
(74) Mandataire: Kiehl, Hubert

(56) Documents cités:
- EP-A1- 0 567 853
- US-A- 3 785 579
- US-A1- 2002 141 286
- US-A1- 2006 102 018

## Description

La présente invention se rapporte au domaine technique général des appareils électroménagers de préparation culinaire comportant un récipient de travail comprenant une enveloppe fixée par rotation sur une embase amovible munie d'un outil rotatif et concerne plus particulièrement un appareil comportant un dispositif de sécurité empêchant l'entraînement de l'outil rotatif lorsque l'enveloppe n'est pas correctement fixée sur l'embase amovible.

Il est connu, de la demande de brevet US 3 785 579, un appareil blender comportant un boîtier moteur muni d'un siège de réception d'un récipient de travail, le récipient de travail comprenant une enveloppe fixée par vissage sur une embase amovible. Pour empêcher le fonctionnement de l'appareil lorsque l'embase amovible est engagée seule sur le boîtier moteur, l'embase amovible comporte un outil qui est soulevé axialement par un ressort lorsque l'enveloppe n'est pas présente sur l'embase amovible et l'appareil comporte de plus un interrupteur de sécurité détectant la présence de l'enveloppe.

Cependant, un tel dispositif de sécurité présente l'inconvénient d'être relativement complexe à mettre en oeuvre et n'empêche pas le fonctionnement de l'appareil lorsque l'enveloppe est présente sur l'embase amovible mais insuffisamment vissée sur cette dernière pour assurer une parfaite étanchéité, le couple de serrage de l'enveloppe sur l'embase amovible devant être suffisamment important pour écraser le joint d'étanchéité et éviter tout risque de desserrage sous l'effet des vibrations lors du fonctionnement de l'appareil. Il en résulte un risque d'utilisation de l'appareil avec un récipient présentant des fuites à la jonction entre la base amovible et l'enveloppe, et donc un risque de détérioration de l'appareil ou au moins des difficultés de nettoyage.

Un but de la présente invention consiste donc à proposer un appareil comportant un dispositif de sécurité empêchant le fonctionnement de l'appareil, et en particulier l'entraînement de l'outil rotatif, lorsque l'enveloppe n'est pas correctement fixée sur la base amovible et présentant l'avantage d'être simple et économique à réaliser. Un autre but de la présente invention est de proposer un dispositif empêchant tout risque de desserrage de l'enveloppe par rapport à l'embase amovible lors du fonctionnement de l'appareil.

A cet effet, l'invention se rapporte à un appareil électroménager de préparation culinaire, tel qu'un blender, comportant un boîtier renfermant un moteur comprenant un entraîneur débouchant au sein d'un siège de réception d'un récipient de travail, le récipient de travail comprenant une enveloppe fixée par rotation sur une embase amovible prévue pour s'engager axialement sur le siège de réception, le siège de réception comportant au moins un élément de positionnement venant coopérer avec un élément de guidage porté par le récipient pour positionner angulairement ce dernier sur le siège de réception, ladite embase amovible supportant un outil rotatif comportant un arbre dont l'extrémité inférieure comporte un connecteur destiné à s'accoupler avec l'entraîneur, caractérisé en ce que l'élément de guidage comprend une première partie portée par l'embase amovible et une deuxième partie portée par la partie inférieure de l'enveloppe, les première et deuxième partie de l'élément de guidage venant s'aligner l'une avec l'autre lorsque l'enveloppe est correctement fixée sur l'embase amovible et étant décalées angulairement lorsque l'enveloppe n'est pas correctement assemblée sur l'embase amovible.

Une telle caractéristique présente l'avantage de permettre l'insertion de l'embase amovible au fond du siège de réception et l'accouplement du connecteur avec l'entraîneur uniquement lorsque l'enveloppe est correctement fixée sur l'embase amovible.

Selon une autre caractéristique de l'invention, l'enveloppe du récipient est fixée par une liaison baïonnette sur l'embase amovible.

Selon une autre caractéristique de l'invention, l'élément de positionnement est constitué par au moins une nervure s'étendant sensiblement axialement à la périphérie intérieure du siège de réception, l'élément de guidage étant constitué par une première rainure s'étendant à la périphérie extérieure de l'embase amovible et par une seconde rainure s'étendant à la périphérie extérieure de l'enveloppe et destinée à venir dans le prolongement de la première rainure, lesdites première et seconde rainures présentant une forme complémentaire à la nervure.

Selon une autre caractéristique de l'invention, lesdites première et seconde rainures sont d'une couleur différente du reste de l'appareil.

Selon encore une autre caractéristique de l'invention, l'enveloppe comporte un élément venant actionner un interrupteur de sécurité disposé sur le circuit d'alimentation du moteur du boîtier lorsque l'enveloppe est correctement engagée sur le siège de réception de sorte que le moteur ne puisse fonctionner qu'en présence de l'enveloppe sur le boîtier moteur.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil blender selon un mode particulier de réalisation de l'invention, le récipient étant représenté désaccouplé du boîtier moteur et avec la base amovible démontée.
- la figure 2 est une vue en perspective, de dessous, du récipient de l'appareil de la figure 1 avec la base amovible démontée,
- la figure 3 est une vue en perspective, de dessus, du boîtier de l'appareil de la figure 1,
- la figure 4 est une vue en perspective semblable à celle de la figure 1 avec la base amovible correctement fixée à l'enveloppe du récipient,
- la figure 5 est une vue en perspective semblable à celle de la figure 4 lorsque le récipient est posé sur le boîtier moteur,
- la figure 6 est une vue en perspective du récipient de l'appareil avec la base amovible insuffisamment vissée sur l'enveloppe,
- la figure 7 est une vue en perspective de l'appareil lorsque le récipient illustré à la figure 6 est monté sur le boîtier moteur

Seuls les éléments nécessaires à la compréhension de l'invention ont été représentés. Pour faciliter la lecture des dessins les mêmes éléments portent les mêmes références d'une figure à l'autre.

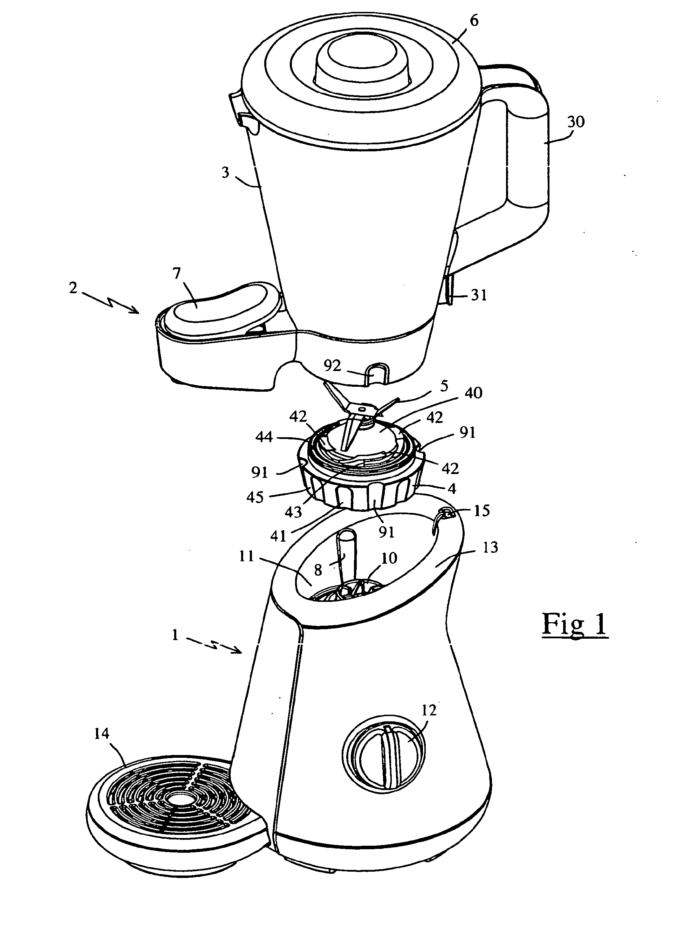

Les figures 1 à 3 illustrent un appareil blender comportant un boîtier moteur 1 renfermant classiquement un moteur, non représenté sur les figures, dont l'arbre de sortie est relié à un entraîneur 10 débouchant au sein d'un siège de réception 11 d'un récipient de travail 2, le boîtier moteur 1 étant muni d'un bouton 12 permettant la mise en marche ou l'arrêt du moteur.

Le siège de réception 11 est constitué par une cavité annulaire bordée par une paroi 13 dont la forme est adaptée pour recevoir la partie inférieure du récipient de travail 2, ce dernier comprenant une enveloppe 3 conique dont l'extrémité inférieure présente une ouverture circulaire 30 au niveau de laquelle peut être fixée une embase amovible 4 supportant un outil rotatif 5 et dont l'extrémité supérieure est fermée par un couvercle 6.

L'enveloppe 3 du récipient 2 comporte avantageusement un robinet 7 débouchant latéralement à l'extrémité inférieure de l'enveloppe 3, ce robinet 7 permettant l'évacuation directe des aliments en direction d'un verre disposé sur une plateforme 14 solidaire du boîtier moteur 1.

L'enveloppe 3 comporte également, à l'opposé du robinet 7, une poignée 30 facilitant la préhension du récipient 2 ainsi qu'une languette de guidage 31 disposée sous la poignée 30 et destinée à s'insérer dans une ouverture 15 adaptée de la paroi délimitant le siège de réception 11.

Une telle languette 15 permet d'orienter l'enveloppe 3 et donc le robinet 7 par rapport au boîtier moteur 1, la bordure supérieure de la paroi 13 délimitant le siège de réception 11 s'étendant à une plus faible hauteur du côté du boîtier comportant la plateforme 14 de réception du verre et que du côté opposé comportant l'ouverture 15.

Afin d'interdire la mise en marche du moteur de l'appareil lorsque l'enveloppe 3 n'est pas présente sur le boîtier moteur 1, le boîtier moteur 1 renferme avantageusement un interrupteur de sécurité disposé sous l'ouverture 15 et coupant l'alimentation électrique du moteur lorsqu'il n'est pas actionné par la languette 31 portée par l'enveloppe 3 du récipient.

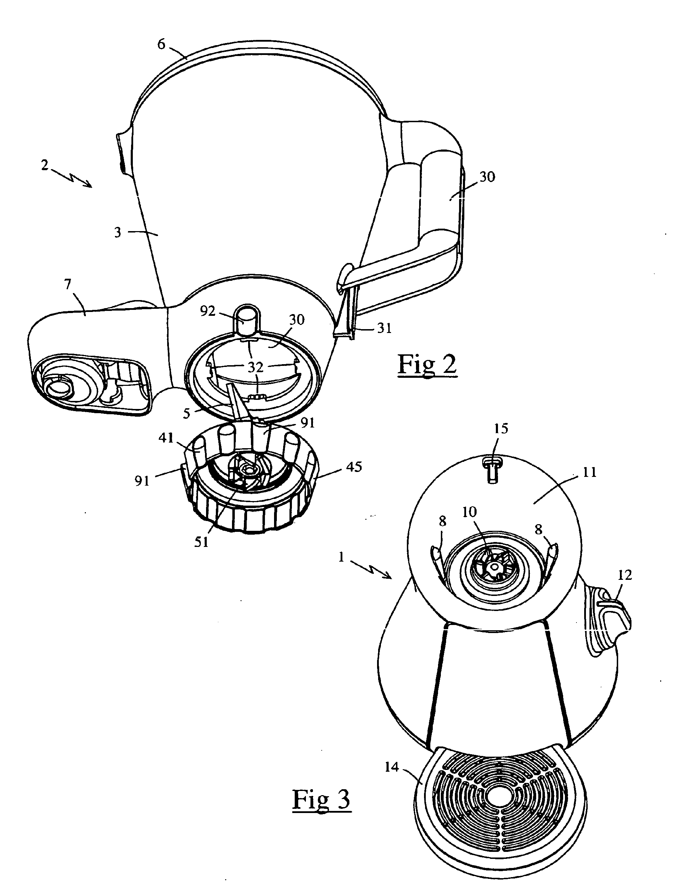

Conformément aux figures 1 et 2, l'embase amovible 4 comporte un corps circulaire présentant une partie centrale en forme de dôme 40, définissant le fond du récipient. L'outil rotatif 5 est disposé au sommet du dôme 40 et comporte un arbre traversant l'embase amovible 4 dont l'extrémité inférieure est munie d'un connecteur 51 adapté pour s'accoupler avec l'entraîneur 10 du boîtier moteur lorsque l'embase amovible 4 est correctement introduite au fond du siège de réception 11.

De manière préférentielle, l'embase amovible 4 est fixée sous l'enveloppe 3 du récipient par une liaison baïonnette, l'embase amovible 4 comportant quatre rampes de guidage 42 dans lesquels viennent s'engager quatre ergots 32 faisant saillie à l'intérieur de l'enveloppe 3, à proximité de son extrémité inférieure, de sorte que la fixation de l'embase amovible 4 sous l'enveloppe 3 s'effectue par rotation de l'ordre d'un huitième de tour.

Les quatre rampes de guidage 42 s'étendent circulairement à la périphérie du dôme 40 et sont avantageusement réparties à 90° les unes des autres, les rampes de guidage 42 comportant une extrémité fermée formant une butée 43 sur laquelle vient s'appuyer l'ergot 32 lorsque l'embase amovible 4 est correctement assemblée sous l'enveloppe 3.

Afin d'assurer l'étanchéité à la jonction entre l'enveloppe 3 et l'embase amovible 4, cette dernière comporte un joint d'étanchéité 44 annulaire, avantageusement en silicone, s'étendant sur une surface support disposée à la périphérie des rampes de guidage 42 et présentant un diamètre correspondant au diamètre de l'extrémité inférieure de l'enveloppe 3.

L'embase amovible 4 comporte également une jupe périphérique 45 prolongeant la surface support du joint d'étanchéité 44, la jupe périphérique 45 présentant une forme conique adaptée pour venir prolonger la forme conique de l'enveloppe 3.

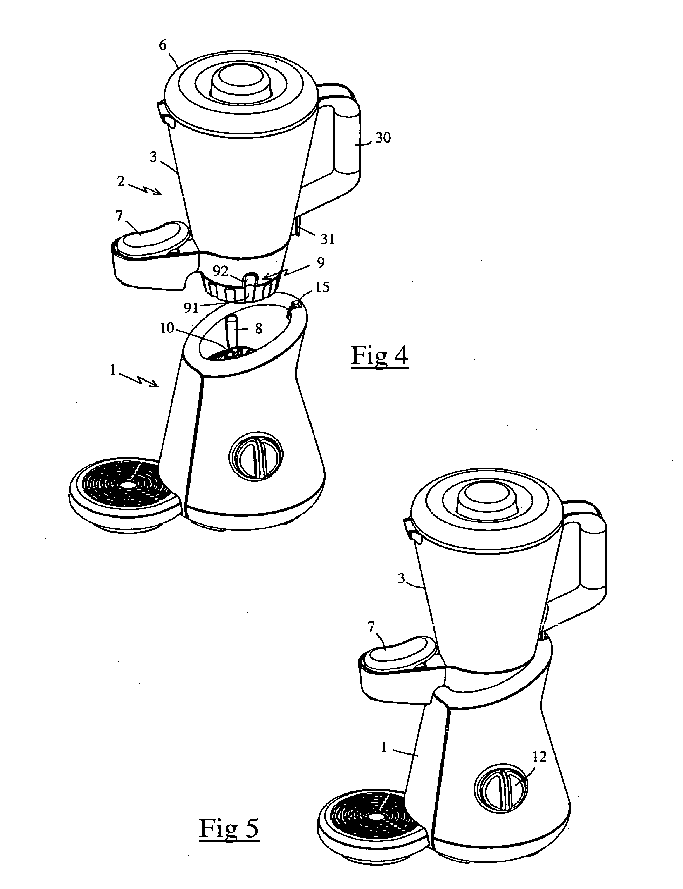

Conformément à la figure 3, le siège de réception 11 du récipient de travail 2 comporte deux nervures 8 en relief, disposées à 180° l'une de l'autre, et faisant saillie à l'intérieur du siège de réception 11, ces nervures 8 formant des éléments de positionnement destinés à s'engager dans des éléments de guidage constitués par des rainures 9 de forme complémentaire portées par le récipient, visibles sur la figure 4, lorsque ce dernier est engagé axialement dans le siège de réception.

Plus particulièrement selon l'invention, les rainures de guidage 9 s'étendent pour partie sur la jupe périphérique 45 et pour partie sur l'extrémité inférieure de l'enveloppe 3 de sorte que l'engagement complet du récipient 2 dans le siège de réception 11 ne peut s'effectuer que lorsque l'enveloppe 3 est correctement assemblée avec l'embase amovible 4.

A cet effet, les rainures de guidage 9 destinées à recevoir les nervures 8 sont formées par une première partie constituée par une rainure 91 s'étendant sensiblement axialement sur la surface extérieure de la jupe périphérie 45 de l'embase amovible 4 et par une seconde partie constituée par une rainure 92 formée sur la surface extérieure de l'enveloppe 3 et débouchant sur la surface inférieure de cette dernière, cette rainure 92 étant destinée à venir dans la prolongement de la rainure 91 de l'embase amovible 4 lorsque cette dernière est correctement fixée sous l'enveloppe 3.

De manière préférentielle, la surface extérieure de la jupe périphérique 45 comporte quatre rainures identiques 91 débouchant à la fois sur la surface supérieure et sur la surface inférieure de la jupe périphérique 45, ces quatre rainures 91 étant réparties à 90° l'une de l'autre de telle sorte que deux des quatre rainures 91 viennent s'aligner avec les deux rainures 92 disposées à 180° l'une de l'autre sur la surface extérieure de l'enveloppe 3 et former ainsi une rainure de guidage 9 complète lorsque l'enveloppe 3 est correctement fixée sur l'embase amovible 4 et ceci quelque soit la position relative de départ des rainures 91, 92 lors de l'engagement de l'enveloppe 3 sur l'embase amovible 4.

La surface extérieure de la jupe périphérique 45 comporte également des renfoncements 41, intercalés entre les quatre rainures 91, mais ne débouchant pas sur la surface supérieure de la jupe périphérique 45, ces renfoncements 41 étant présents uniquement pour favoriser la préhension de l'embase amovible 4 et permettre notamment une meilleure prise lors de sa rotation pour sa fixation sous l'enveloppe 3.

De manière avantageuse, les quatre rainures 91 de l'embase amovible 4 et les deux rainures 92 de l'enveloppe 3 seront peintes dans une couleur différente du reste de l'appareil, par exemple en rouge ou en vert, de manière à servir de repères visuels pour l'utilisateur et permettre à ce dernier d'identifier rapidement le bon assemblage de l'enveloppe sur l'embase amovible.

Le fonctionnement du dispositif de sécurité ainsi réalisé va maintenant être décrit en relation avec les figures 4 à 7.

La figure 4 illustre le positionnement angulaire de l'embase amovible 4 par rapport à l'enveloppe 3 lorsque ces deux parties du récipient sont correctement assemblées, c'est-à-dire lorsque les ergots 32 portés par l'enveloppe sont en appui contre les butées 43 des rampes de guidage 42 de la liaison baïonnette.

Conformément à cette figure, les deux rainures 92 de l'enveloppe sont alors parfaitement alignées avec deux des rainures 91 de l'embase amovible, formant ainsi deux rainures de guidage 9, disposées à 180° l'une de l'autre, présentant une longueur et une forme adaptée pour recevoir les nervures 8 de positionnement portées par le siège de réception 11 et permettre l'insertion du récipient 3 jusqu'à ce que l'embase amovible 4 vienne reposer au fond du siège de réception 11, le connecteur 51 étant alors accouplé à l'entraîneur 10 et la languette 31 introduite dans l'ouverture 15 pour actionner l'interrupteur de sécurité autorisant le fonctionnement du moteur. L'appareil peut alors être utilisé en toute sécurité, l'embase amovible 4 étant parfaitement fixée à l'enveloppe 3 et le joint d'étanchéité 44 étant suffisamment écrasé pour assurer une parfaite étanchéité. De plus, l'engagement des nervures 8 dans les rainures 91, 92, portées respectivement par l'embase amovible 4 et par l'enveloppe 3, présente alors l'avantage d'empêcher tout desserrage de la liaison baïonnette sous l'effet des vibrations lors du fonctionnement de l'appareil et donc tout risque d'apparition de fuite du fait de ce desserrage.

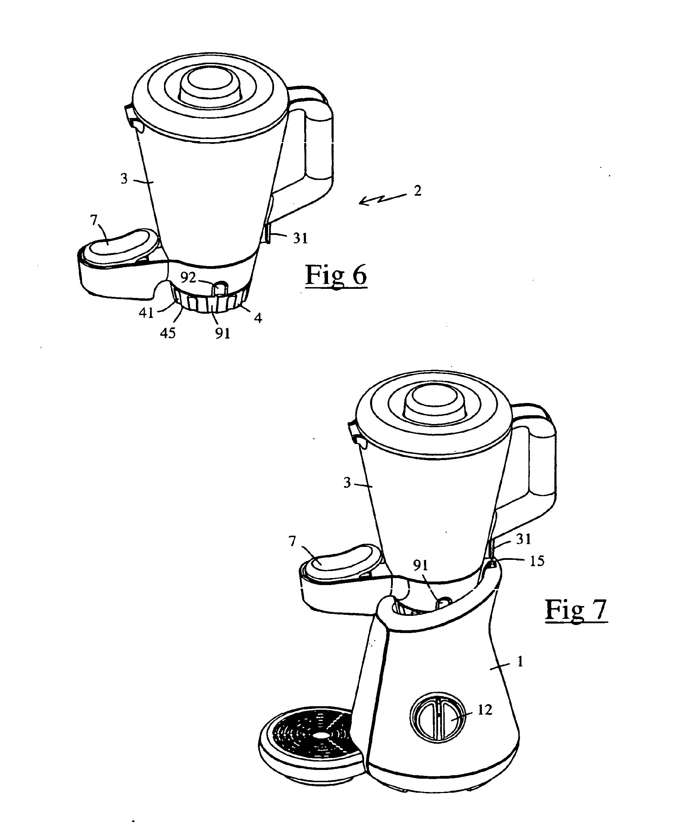

A l'inverse, la figure 6 illustre un exemple d'assemblage imparfait de l'enveloppe 3 du récipient sur l'embase amovible 4 du fait d'un engagement rotation insuffisant de la liaison baïonnette.

Conformément à cette figure, la rainure 92 du récipient de travail 2 se trouve alors décalée par rapport à la rainure 91 de la base amovible 4 de sorte que si l'on tente de placer le récipient de travail 2 dans le siège de réception 11, ainsi que cela est illustré sur la figure 7, l'extrémité supérieure des nervures 8 de positionnement du siège de réception 11 va venir buter contre le bord inférieur de la jupe périphérique 45 de l'embase amovible 4, empêchant ainsi l'insertion de l'embase amovible 4 jusqu'au fond du siège de réception 11 et l'accouplement du connecteur 51 avec l'entraîneur 10.

La descente du récipient 2 dans le siège de réception 11 est également empêchée par le décalage angulaire existant alors entre la languette 31 et l'ouverture 15, la languette 31 venant buter contre le bord supérieur de la paroi 13.

L'appareil est alors inutilisable puisque te connecteur 51 de l'outil rotatif n'est pas accouplé à l'entraîneur 10 du boîtier moteur 1 et l'interrupteur de sécurité disposé derrière l'ouverture 15 n'est pas actionné par la languette 31.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, l'enveloppe du récipient pourra être fixée sur l'embase du récipient par vissage plutôt que par une liaison baïonnette.

Ainsi, dans une autre variante de réalisation, les éléments de positionnement portés par le siège de réception pourront être constitués par des rainures et les éléments de guidage portés pour partie par l'enveloppe et par l'embase amovible pourront être constitués par des rainures.

## Revendications

1. Appareil électroménager de préparation culinaire, tel qu'un blender, comportant un boîtier (1) renfermant un moteur comprenant un entraîneur (10) débouchant au sein d'un siège de réception (11) d'un récipient de travail (2), ledit récipient de travail (2) comprenant une enveloppe (3) fixée par rotation sur une embase amovible (4) prévue pour s'engager axialement sur le siège de réception (11), ledit siège de réception (11) comportant au moins un élément de positionnement (8) venant coopérer avec un élément de guidage (9) porté par le récipient pour positionner angulairement ce dernier sur le siège de réception (11), ladite embase amovible (4) supportant un outil rotatif (5) comportant un arbre dont l'extrémité inférieure comporte un connecteur (51) destiné à s'accoupler avec ledit entraîneur (10), **caractérisé en ce que** ledit élément de guidage (9) comprend une première partie (91) portée par l'embase amovible (4) et une deuxième partie (92) portée par la partie inférieure de l'enveloppe (3), lesdites première (91) et deuxième partie (92) de l'élément de guidage (9) venant s'aligner l'une avec l'autre lorsque l'enveloppe (3) est correctement fixée sur l'embase amovible (4) et étant décalées angulairement lorsque l'enveloppe (3) n'est pas correctement assemblée sur l'embase amovible (4).

2. Appareil électroménager de préparation culinaire selon la revendication 1, **caractérisé en ce que** ladite enveloppe (3) est fixée par une liaison baïonnette sur ladite embase amovible (4).

3. Appareil électroménager de préparation culinaire selon l'une quelconque des revendications 1 à 2, **caractérisé en ce que** ledit élément de positionnement (8) est constitué par au moins une nervure s'étendant sensiblement axialement à la périphérie intérieure du siège de réception (11) et **en ce que** ledit élément de guidage (9) est constitué par une première rainure (91) s'étendant à la périphérie extérieure de l'embase amovible (4) et par une seconde rainure (92) s'étendant à la périphérie extérieure de l'enveloppe (3) et destinée à venir dans le prolongement de la première rainure (91), les première (91) et seconde (92) rainures présentant une forme complémentaire à la nervure (8).

4. Appareil électroménager de préparation culinaire selon la revendication 3, **caractérisé en ce que** lesdites première (91) et seconde (92) rainures sont d'une couleur différente du reste de l'appareil.

5. Appareil électroménager de préparation culinaire selon l'une quelconque des revendications 1 à 4, **caractérisé en ce que** ladite enveloppe (3) comporte un élément (31) venant actionner un interrupteur de sécurité disposé sur le circuit d'alimentation du moteur du boîtier (1) lorsque l'enveloppe (3) est correctement engagée sur le siège de réception (11) de sorte que le moteur ne puisse fonctionner qu'en présence de l'enveloppe (3) sur le boîtier moteur (1).

## Claims

1. An electrical household cooking appliance, such as a blender, comprising a housing (1) containing a motor comprising a driver (10) projecting into a seat (11) where a work receptacle (2) is received, said work receptacle (2) comprising a jacket (3) secured by rotation to a removable base (4) designed to engage axially on the receiving seat (11), said receiving seat (11) comprising at least one locating element (8) that interacts with a guide element (9) carried by the receptacle to locate the latter angularly on the receiving seat (11), said removable base (4) supporting a rotary tool (5) having a shaft whose bottom end has a connector (51) designed to connect to said driver (10), **characterised in that** said guide element (9) comprises a first part (91) mounted on the removable base (4) and a second part (92) mounted on the lower part of the jacket (3), said first (91) and second (92) parts of the guide element (9) lining up with each other when the jacket (3) is correctly secured to the removable base (4) and being offset angularly when the jacket (3) is not correctly assembled on the removable base (4).

2. An electrical household cooking appliance according to claim 1, **characterised in that** said jacket (3) is secured by a bayonet connection to said removable base (4).

3. An electrical household cooking appliance according to any one of claims 1 to 2, **characterised in that** said locating element (8) is made up of at least one rib extending substantially axially to the inner periphery of the receiving seat (11) and **in that** said guide element (9) is made up of a first groove (91) extending to the outer periphery of the removable base (4) and a second groove (92) extending to the outer periphery of the jacket (3) and designed to come in the extension of the first groove (91), the first (91) and second (92) grooves having a shape complementary to the rib (8).

4. An electrical household cooking appliance according to claim 3, **characterised in that** said first (91) and second (92) grooves have a colour different from the rest of the appliance.

5. An electrical household cooking appliance according to any one of claims 1 to 4, **characterised in that** said jacket (3) comprises an element (31) that actuates a safety switch arranged on the motor supply circuit in the housing (1) when the jacket (3) is correctly engaged on the receiving seat (11) such that the motor can operate only when the jacket (3) is present on the motor housing (1).

## Patentansprüche

1. Elektrohaushaltsgerät für kulinarische Zubereitungen in der Art eines Standmixers, umfassend ein Gehäuse (1), das einen Motor einschließt, der einen Mitnehmer (10) umfasst, der in einen Aufnahmesitz (11) für einen Arbeitsbehälter (2) mündet, wobei der Arbeitsbehälter (2) eine Wandung (3) umfasst, die mittels Drehung auf einer abnehmbaren Basis (4) befestigt wird, die vorgesehen ist, um sich axial in den Aufnahmesitz (11) einzufügen, wobei der Aufnahmesitz (11) mindestens ein Positionierungselement (8) umfasst, das mit einem Führungselement (9), das vom Behälter getragen wird, zusammenwirkt, um Letzteren winkelmäßig im Aufnahmesitz (11) zu positionieren, wobei die abnehmbare Basis (4) ein Drehwerkzeug (5) trägt, das eine Welle umfasst, deren unteres Ende ein Verbindungsglied (51) umfasst, das dazu bestimmt ist, sich mit dem Mitnehmer (10) zu verkoppeln, **dadurch gekennzeichnet, dass** das Führungselement (9) einen ersten Teil (91), der von der abnehmbaren Basis (4) getragen wird, und einen zweiten Teil (92) umfasst, der vom unteren Teil der Wandung (3) getragen wird, wobei sich der erste (91) und der zweite Teil (92) des Führungselements (9) zueinander ausrichten, wenn die Wandung (3) richtig auf der abnehmbaren Basis (4) befestigt wird, und wobei sie winkelversetzt sind, wenn die Wandung (3) nicht richtig auf der abnehmbaren Basis (4) angebracht wird.

2. Elektrohaushaltsgerät für kulinarische Zubereitungen nach Anspruch 1, **dadurch gekennzeichnet, dass** die Wandung (3) mittels Bajonettverbindung auf der abnehmbaren Basis (4) befestigt ist.

3. Elektrohaushaltsgerät für kulinarische Zubereitungen nach einem der Ansprüche 1 bis 2, **dadurch gekennzeichnet, dass** das Positionierungselement (8) von mindestens einem Profil gebildet wird, das sich im Wesentlichen axial am Innenrand des Aufnahmesitzes (11) erstreckt, und **dadurch**, dass das Führungselement (9) von einer ersten Rille (91), die sich am Außenrand der abnehmbaren Basis (4) erstreckt, und von einer zweiten Rille (92) gebildet wird, die sich am Außenrand der Wandung (3) erstreckt und die dazu bestimmt ist, sich in Verlängerung der ersten Rille (91) anzuordnen, wobei die erste (91) und die zweite (92) Rille eine Form aufweisen, die zum Profil (8) komplementär ist.

4. Elektrohaushaltsgerät für kulinarische Zubereitungen nach Anspruch 3, **dadurch gekennzeichnet, dass** die erste (91) und die zweite (92) Rille eine vom übrigen Gerät verschiedene Farbe aufweisen.

5. Elektrohaushaltsgerät für kulinarische Zubereitungen nach einem der Ansprüche 1 bis 4, **dadurch gekennzeichnet, dass** die Wandung (3) ein Element (31) umfasst, das einen Sicherheitsschalter betätigt, der im Stromversorgungskreis des Motors des Gehäuses (1) angeordnet ist, sobald die Wandung (3) richtig in den Aufnahmesitz (11) eingefügt wird, so dass der Motor nur funktionieren kann, wenn sich die Wandung (3) auf dem Motorgehäuse (1) befindet.
